# EUROPEAN PATENT SPECIFICATION

(11) **EP 3 670 913 B1**
(45) Date of publication and mention of the grant of the patent: **25.08.2021**
(21) Application number: 18859577.1
(22) Date of filing: 18.07.2018
(51) Int. Cl.: F04B 53/08, F04B 23/02, F28F 9/00, F01M 5/00, F28D 1/02, F28D 1/03, F28D 1/053, F28D 21/00

(54) **HYDRAULIC UNIT**
HYDRAULIKAGGREGAT
UNITÉ HYDRAULIQUE

(30) Priority: 19.09.2017 JP 2017178747
(43) Date of publication of application: 24.06.2020
(73) Proprietor: Daikin Industries, Ltd., Osaka-shi, Osaka 530-8323 (JP)
(72) Inventor: TORII, Hirotoshi, Osaka-shi Osaka 530-8323 (JP)
(74) Representative: Goddar, Heinz J.
(86) International application number: PCT/JP2018/026860
(87) International publication number: WO 2019/058732

(56) References cited:
- JP-A- H06 147 788
- JP-A- H11 182 447
- JP-A- 2001 133 186
- JP-A- 2008 008 252

## Description

### TECHNICAL FIELD

The present invention relates to a hydraulic unit.

### BACKGROUND ART

A conventional hydraulic unit includes a hydraulic pump, a motor that drives the hydraulic pump, an oil cooler that is provided near the motor, and a cooling fan that cools the oil cooler (see Patent Literature 1). In this hydraulic unit, air blown out from the cooling fan cools the motor and the oil cooler disposed on the downstream side of the cooling fan.

JP 2008 008 252 A discloses a hydraulic unit according to the preamble of claims 1 and 2.

JP H06 147788 A and JP 2001 133186 A each disclose a shroud including a wall section that covers at least one of a pair of headers.

### SUMMARY OF INVENTION

### TECHNICAL PROBLEMS

There is a hydraulic unit having similar configuration as that of the above conventional hydraulic unit but configured such that wind direction of the cooling fan is opposite to that in the conventional hydraulic unit, so that the flow of air sucked into the cooling fan cools the motor and the oil cooler. At this time, in a case where the oil cooler has a header adjacent to a heat exchange unit, there is a problem that since the cooling fan directly sucks air from around the header of the oil cooler, part of the air sucked by the cooling fan does not flow around the motor, the volume of the cooling air that cools the motor decreases, and the cooling efficiency of the motor lowers.

Therefore, an object of the present invention is to provide a hydraulic unit that can suppress a decrease in cooling efficiency of a motor.

### SOLUTION TO PROBLEMS

According to one aspect the present invention provides a hydraulic unit according to claim 1.

According to this configuration, in a case where the cooling fan sucks cooling air from around the motor and through the oil cooler, since the wall section of the shroud covers at least one of the pair of headers of the oil cooler, the wall section blocks a flow of air directly sucked into the cooling fan from around the header of the oil cooler without flowing around the motor. In addition, in a case where the cooling air blown out from the cooling fan is supplied to the motor side through the oil cooler, since the wall section of the shroud covers at least one of the pair of headers of the oil cooler, the wall section blocks the flow of air leaking from the header of the oil cooler. Therefore, compared with a case where a shroud does not include the wall section, the volume of cooling air which flows around the motor among the cooling air supplied by the cooling fan increases, and it is possible to suppress a decrease in cooling efficiency of the motor.

The guide section of the shroud guides part of the cooling air blown out from the cooling fan toward the heat sink. Therefore, the cooling fan can cool the drive circuit in addition to the motor and the oil cooler.

According to a further aspect, the present invention provides a hydraulic unit according to claim 2.

According to this configuration, the louver guides part of the cooling air blown out from the cooling fan toward the heat sink. Therefore, the cooling fan can cool the drive circuit of the controller in addition to the motor and the oil cooler.

According to one embodiment, the hydraulic unit further includes

a motor cover that is provided such that the cooling air supplied by the cooling fan flows around the motor and that the motor cover covers the motor,
in which the motor cover has a shape that is adapted to a shape of the motor.

In the above embodiment, since the motor cover has the shape that is adapted to the shape of the motor, the cooling air supplied by the cooling fan flows along the shape of the motor. Therefore, the cooling air flowing away from the motor among the cooling air supplied by the cooling fan decreases. As a result, the volume of the cooling air flowing around the motor increases and a decrease in the cooling efficiency of the motor can be suppressed.

In one embodiment, the motor cover covers almost entire space between the oil cooler and the motor.

According to the above embodiment, since the motor cover covers almost the entire space between the oil cooler and the motor, in a case where the cooling fan sucks the cooling air from around the motor and through the oil cooler, the motor cover blocks the flow of air that does not flow around the motor but is directly sucked into the cooling fan from between the motor and the motor. In addition, in a case where the cooling air blown out from the cooling fan is supplied to the motor side through the oil cooler, the motor cover blocks the flow of the cooling air from the space between the oil cooler and the motor toward the outside of the motor cover. Therefore, the volume of cooling air supplied by the cooling fan and flowing around the motor can be increased, and a decrease in the cooling efficiency of the motor can be suppressed.

According to one embodiment, the hydraulic unit further includes
a motor cover that is provided such that the cooling air supplied by the cooling fan flows around the motor and that the motor cover covers the motor,
in which the motor cover covers the heat sink.

In the above embodiment, since the motor cover covers the motor and the heat sink, the cooling air supplied to the inside of the motor cover by the cooling fan flows around the heat sink in addition to the motor and the oil cooler. Therefore, the cooling fan can cool the drive circuit of the controller in addition to the motor and the heat sink.

### ADVANTAGEOUS EFFECTS OF INVENTION

As apparent from the above, according to the present invention, the wall section of the shroud covers at least one of the headers of the oil cooler. Therefore, the volume of cooling air supplied by the cooling fan and flowing around the motor increases and a decrease in the cooling efficiency of the motor can be suppressed.

### BRIEF DESCRIPTION OF DRAWINGS

FIG. 1 is a perspective view of a hydraulic unit according to an example which is not covered by the claims but is useful for understanding the invention.
FIG. 2 is a side view of the hydraulic unit with a motor cover of the hydraulic unit removed.
FIG. 3 is a side view of the hydraulic unit with a pump of the hydraulic unit removed.
FIG. 4 is a front view of an oil cooler and a shroud.
FIG. 5 is a plan view of the hydraulic unit.
FIG. 6 is a perspective view of the motor cover.
FIG. 7 is a perspective view of a shroud according to a first embodiment of the present invention.
FIG. 8 is a plan view of a hydraulic unit according to the first embodiment of the present invention with a motor cover removed.
FIG. 9 is a perspective view of a louver according to a second embodiment of the present invention.

### DESCRIPTION OF EMBODIMENTS

Hereinafter, a hydraulic unit will be described with reference to the accompanying drawings.

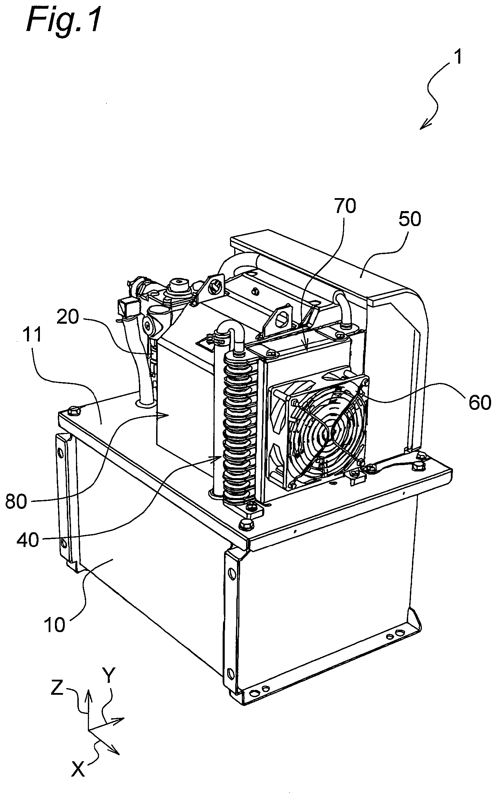

A hydraulic unit 1 supplies hydraulic oil to an external device such as a machine tool. FIG. 1 is a perspective view of the hydraulic unit 1. In the following description, the front-rear direction, the width direction, and the height direction of the hydraulic unit 1 may be referred to as an X direction, a Y direction, and a Z direction, respectively.

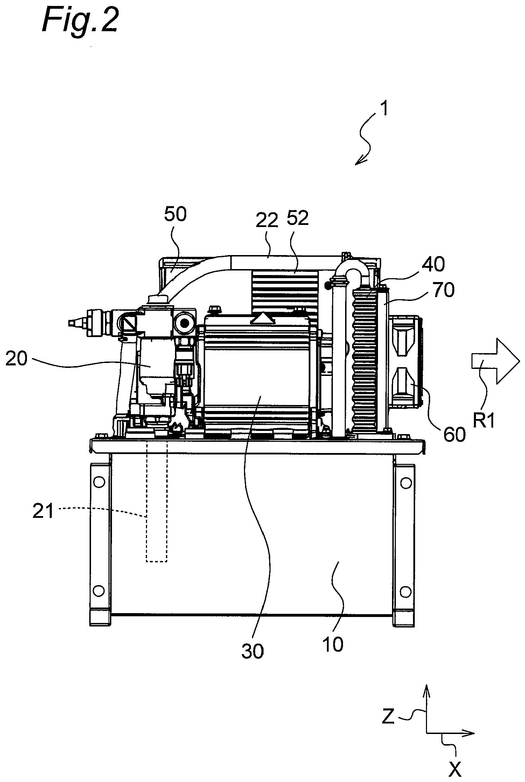

Referring to FIG. 1, the hydraulic unit 1 includes a hydraulic oil tank 10 that stores hydraulic oil, and a stand 11 that is attached to the upper portion of the hydraulic oil tank 10. Note that in the following description, the X direction side (the right side in FIG. 2) and the side opposite in the X direction (the left side in FIG. 2) may be referred to as the front and the rear, respectively. The hydraulic unit 1 includes a hydraulic pump 20, a motor 30 (illustrated in FIG. 2) that drives the hydraulic pump 20, an oil cooler 40 that cools hydraulic oil discharged from the hydraulic pump 20, and a controller 50 that controls the motor 30. The hydraulic pump 20, the motor 30, the oil cooler 40, and the controller 50 are mounted on the stand 11, and the hydraulic oil tank 10 is disposed under the stand 11. In addition, the hydraulic unit 1 includes a cooling fan 60 that supplies cooling air to the motor 30 and the oil cooler 40, a shroud 70 provided between the cooling fan 60 and the oil cooler 40, and a motor cover 80 that covers the motor 30.

FIG. 2 is a side view of the hydraulic unit 1 with the motor cover 80 removed, as viewed in the Y direction.

Referring to FIG. 2, the hydraulic pump 20, the motor 30, the oil cooler 40, the shroud 70, and the cooling fan 60 are disposed in order in the X direction. The hydraulic pump 20 is connected to a suction pipe 21 connected to the hydraulic oil tank 10 and a drain pipe 22 connected to the oil cooler 40. The hydraulic pump 20 is supplied with hydraulic oil from the hydraulic oil tank 10 through the suction pipe 21 and discharges the hydraulic oil to the oil cooler 40 through the drain pipe 22. The cooling fan 60 is an axial fan and is attached to the shroud 70. The cooling fan 60 is disposed so as to blow out air in the X direction (see an arrow R1).

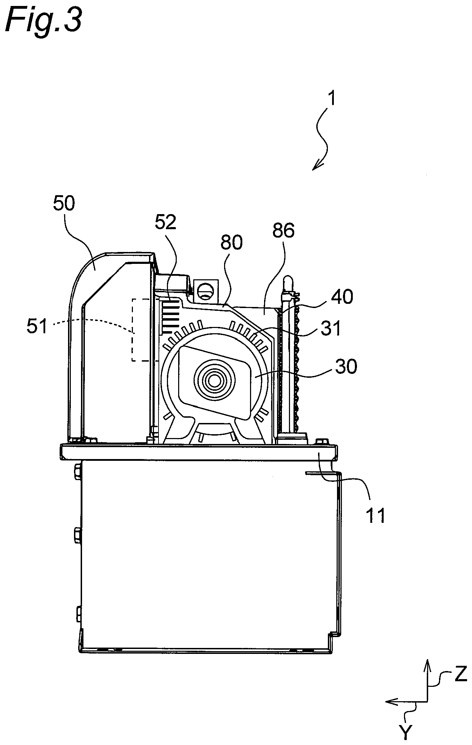

FIG. 3 is a side view of the hydraulic unit 1 with the hydraulic pump 20 removed, as viewed in the X direction.

Referring to FIG. 3, the motor 30 has a cylindrical shape and includes fins 31 protruding radially from the outer periphery. The controller 50 is disposed on a side of the motor 30 in the Y direction. The controller 50 includes a drive circuit 51 and a heat sink 52 that cools the drive circuit 51. The heat sink 52 protrudes from a side surface of the controller 50 and extends above the motor 30. Further, referring also to FIG. 2, the heat sink 52 of the controller 50 is disposed behind the oil cooler 40.

As illustrated in FIG. 3, the motor cover 80 is fixed to the stand 11 and the controller 50 so as to cover the motor 30 and the heat sink 52 of the controller 50. In other words, the motor 30 and the heat sink 52 of the controller 50 are disposed in a space surrounded by the motor cover 80, the stand 11, and the controller 50.

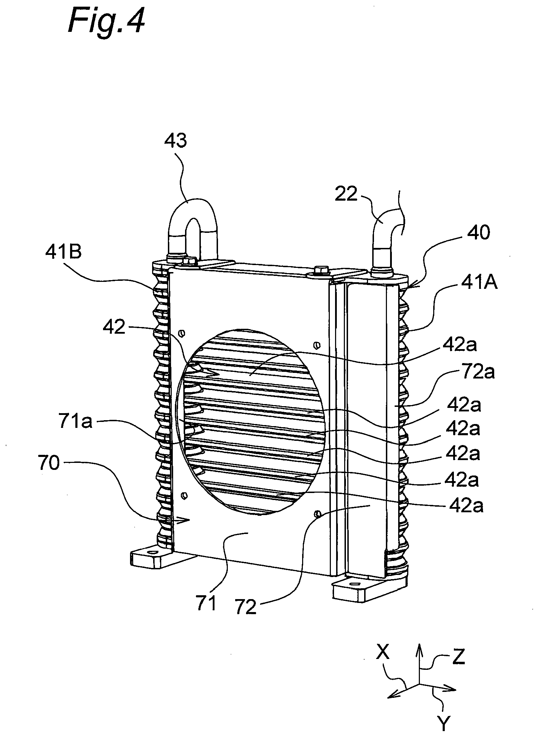

FIG. 4 is a perspective view of the oil cooler 40 and the shroud 70.

Referring to FIG. 4, the oil cooler 40 is an air-cooled heat exchanger, and includes a pair of headers 41A, 41B, and a heat exchange unit 42 provided between the pair of headers 41A, 41B. The drain pipe 22 is connected to one header 41A, and a return pipe 43 is connected to the other header 41B. The heat exchange unit 42 includes a plurality of tubes 42a provided with fins, not illustrated. The high-temperature hydraulic oil that has flowed out from the hydraulic pump 20 (illustrated in FIG. 2) into the oil cooler 40 through the drain pipe 22 is distributed to the plurality of tubes 42a of the heat exchange unit 42 by the one header 41A and is cooled while flowing through the plurality of tubes 42a of the heat exchange unit 42. The cooled hydraulic oil flows into the other header 41B and is returned to the hydraulic oil tank 10 (illustrated in FIG. 2) through the return pipe 43.

The shroud 70 includes a body section 71 having a rectangular shape and a wall section 72 having a rectangular shape. The body section 71 of the shroud 70 has substantially the same size as the heat exchange unit 42 of the oil cooler 40 and covers the heat exchange unit 42 of the oil cooler 40. A circular opening 71a is formed in a substantially central portion of the body section 71 of the shroud 70. Referring also to FIG. 1, the opening 71a of the shroud 70 is covered with the cooling fan 60. The wall section 72 of the shroud 70 covers the one header 41A of the oil cooler 40. The wall section 72 of the shroud 70 has a bent section 72a provided at one end portion thereof and bent rearward so as to be orthogonal to the wall section 72.

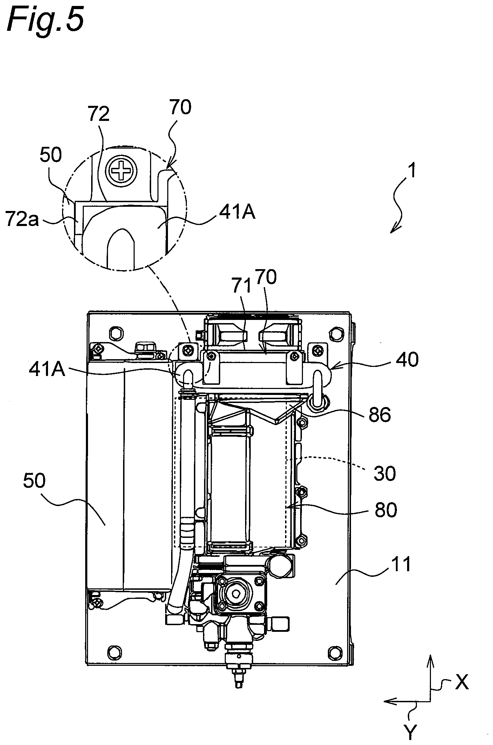

FIG. 5 is a plan view of the hydraulic unit 1. In FIG. 5, a main part is clearly illustrated in an enlarged view surrounded by a one-dot chain line circle.

As illustrated in the enlarged view of FIG. 5, the bent section 72a of the wall section 72 of the shroud 70 is in contact with a side surface of the controller 50. The motor cover 80 covers almost the entire space between the motor 30 and the oil cooler 40. Here, an interval of a filter thickness (about 6 mm) is provided between the motor 30 and the oil cooler 40 so that a filter, not illustrated, can be inserted from above.

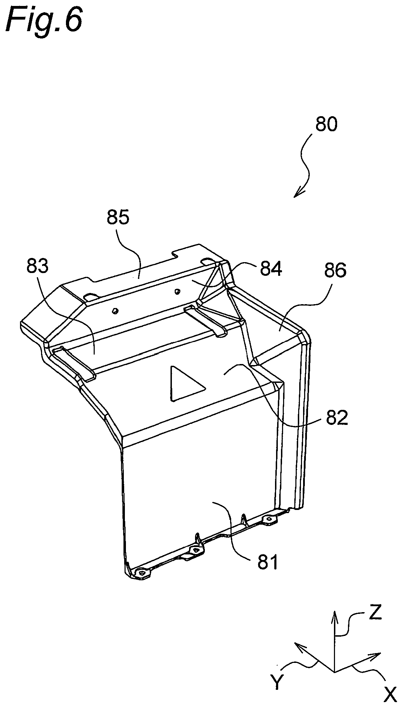

FIG. 6 is a perspective view of the motor cover 80.

Referring to FIG. 6, the motor cover 80 according to the present embodiment includes resin and has the shape that follows the shape of the motor 30 (illustrated in FIG. 3). Specifically, the motor cover 80 includes a first vertical section 81 that extends in the Z direction, an inclined section 82 that is continuous with the first vertical section 81, a first horizontal section 83 that is continuous with the inclined section 82 and extends in the Y direction, a second vertical section 84 that is continuous with the first horizontal section 83 and extends in the Z direction, and a second horizontal section 85 that is continuous with the second vertical section 84 and extends in the Y direction. The inclined section 82 of the motor cover 80 is a flat surface extending obliquely upward toward the Z direction side and the Y direction side. The motor cover 80 includes a flange section 86 that extends outward from the front edge of the first vertical section 81, of the inclined section 82, and of the first horizontal section 83.

The portion surrounded by the front edge of the flange section 86 of the motor cover 80, the stand 11, and the controller 50 has substantially the same size as that of the oil cooler 40 (see FIGS. 3 and 5). The inclined section 82 of the motor cover 80 can further reduce the volume of air that flows away from the motor 30 and does not contribute to cooling among the cooling air supplied by the cooling fan 60, the cooling air flowing inside the motor cover 80 than in a case where the motor cover 80 does not includes the inclined section 82.

### (Flow of cooling air)

As described above, the cooling fan 60 according to the present embodiment blows out air in the X direction.

When the cooling fan 60 is driven, cooling air is sucked into the cooling fan 60 from the rear through the inside of the motor cover 80. The cooling air flows around the motor 30 and the heat sink 52 of the controller 50, and thus cools the motor 30 and the drive circuit 51 of the controller 50. Thereafter, the cooling air flows through the heat exchange unit 42 of the oil cooler 40, cools the hydraulic oil, and is discharged to the outside from the opening 71a of the body section 71 of the shroud 70.

According to this configuration, the wall section 72 of the shroud 70 covers the header 41A of the oil cooler 40, and therefore blocks the flow of air directly sucked into the cooling fan 60 from around the header 41A of the oil cooler 40 without flowing around the motor 30. Therefore, the volume of cooling air that is supplied by the cooling fan 60 and flows around the motor 30 can be increased, and a decrease in the cooling efficiency of the motor 30 can be suppressed.

In the above configuration, since the motor cover 80 has the shape that follows the shape of the motor 30, the cooling air supplied by the cooling fan 60 flows along the shape of the motor 30. Therefore, the volume of cooling air that flows around the motor 30 can be increased, and a decrease in the cooling efficiency of the motor 30 can be suppressed.

According to the above configuration, since the motor cover 80 covers almost the entire space between the oil cooler 40 and the motor 30, the motor cover 80 blocks the flow of air that does not flows around the motor 30 but is directly sucked into the cooling fan 60 from between the oil cooler 40 and the motor 30. Therefore, the volume of cooling air supplied by the cooling fan 60 and flows around the motor 30 can be increased, and a decrease in the cooling efficiency of the motor 30 can be suppressed.

In the above configuration, since the motor cover 80 covers the motor 30 and the heat sink 52, the cooling air supplied to the inside of the motor cover 80 by the cooling fan 60 flows around the heat sink 52 in addition to the motor 30 and the oil cooler 40. Therefore, the cooling fan 60 can cool the drive circuit 51 of the controller 50 in addition to the motor 30 and the oil cooler 40.

### [First embodiment]

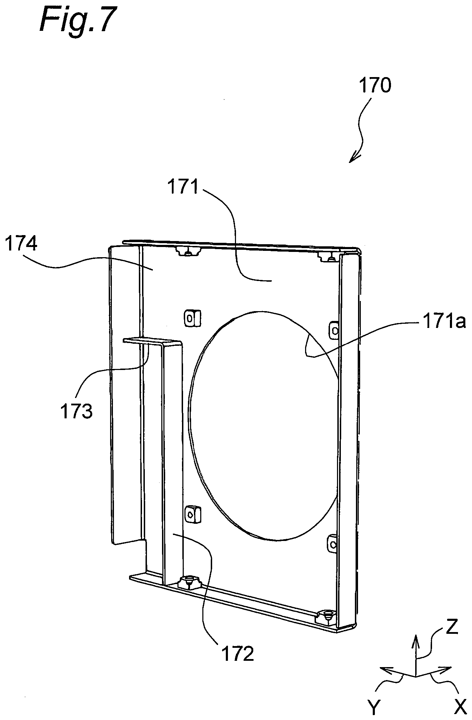

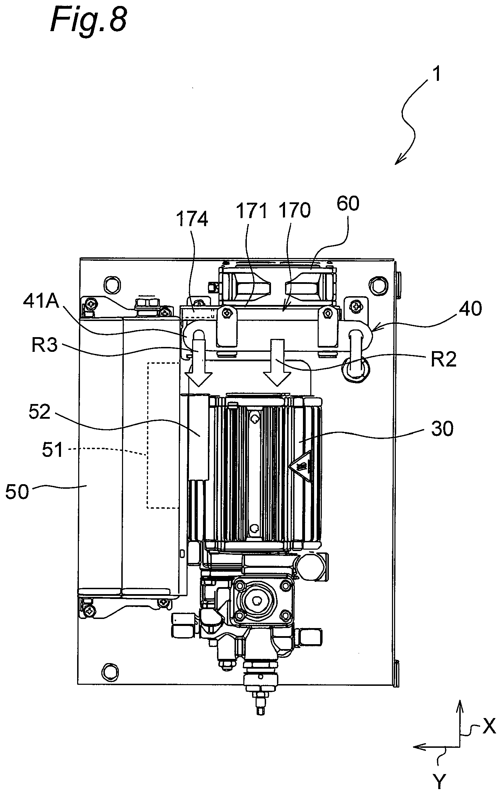

A hydraulic unit 1 according to a first embodiment of the present invention has a configuration identical to that of the above example except for the direction in which the cooling fan 60 blows cooling air and the shape of the shroud 70. The cooling fan 60 according to the first embodiment blows out cooling air from the front to the rear. FIG. 7 is a perspective view of a shroud 170 according to the first embodiment as viewed from the rear, and FIG. 8 is a plan view of the hydraulic unit 1 according to the first embodiment with a motor cover 80 removed. In FIGS. 7 and 8, components identical to those in FIGS. 1 to 6 are denoted by identical reference signs.

Referring to FIG. 7, the shroud 170 includes a body section 171 having a rectangular shape, a vertical wall 172 that protrudes rearward from the body section 171 and extends in the Z direction, and a horizontal wall 173 that protrudes rearward from the body section 171 and extends in the Y direction, and a guide section 174 that is provided on the Y direction side with respect to the vertical wall 172 and on the Z direction side with respect to the horizontal wall 173.

Referring to FIG. 8, the guide section 174 of the shroud 170 is disposed to face one header 41A of an oil cooler 40. The cooling fan 60 according to the present embodiment blows out cooling air from the front to the rear (see an arrow R2). The guide section 174 of the shroud 170 causes part of the cooling air supplied by the cooling fan 60 to flow around the one header 41A of the oil cooler 40 and guides the part of the cooling air toward a heat sink 52 of a controller 50 (see an arrow R3).

According to this configuration, the guide section 174 of the shroud 170 guides the cooling air toward the heat sink 52. Therefore, since part of the cooling air supplied by the cooling fan 60 is guided to the heat sink 52, the cooling fan 60 can cool the drive circuit 51 in addition to a motor 30 and the oil cooler 40.

### [Second embodiment]

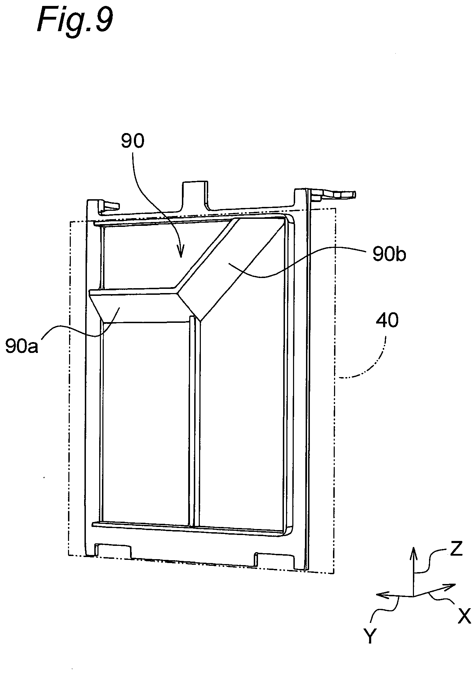

A hydraulic unit 1 according to a second embodiment of the present invention has a configuration identical to that of the first embodiment except that a louver 90 is provided, and will be described with reference to FIGS. 1 to 8. FIG. 9 is a perspective view of a louver 90.

Referring to FIG. 9, the louver 90 is attached to the rear of an oil cooler 40, and includes a first portion 90a and a second portion 90b continuous to the first portion 90a. The first portion 90a of the louver 90 is configured to direct cooling air flowing from the front to the rear obliquely upward. The second portion 90b of the louver 90 is configured to direct the cooling air flowing from the front to the rear obliquely upward and in the Y direction. That is, the louver 90 directs part of the cooling air supplied by the cooling fan 60 to the Y direction side and the Z direction side. The louver 90 guides part of the cooling air supplied by the cooling fan 60 to a heat sink 52 disposed on the Y direction side and the Z direction side with respect to a motor 30.

In the second embodiment, the louver 90 guides part of the cooling air blown out from the cooling fan 60 toward the heat sink 52. Therefore, the cooling fan 60 can cool a drive circuit 51 of a controller 50 in addition to the motor 30 and the oil cooler 40.

The present invention has been described above with reference to the preferred first and second embodiments. However, the present invention is not limited to a specific embodiment, and various changes can be made within the scope of the present invention defined in the claims.

For example, in the embodiments, cooling air supplied by the cooling fan 60 flows from the front to the rear; however, the present invention is not limited thereto, and the cooling air may flow from the rear to the front.

In the embodiments, the motor cover 80 includes a plurality of sides that form a polygon as viewed in the X direction. However, the shape of the motor cover 80 is not limited to the above shape, and may be another shape such as an arc shape that follows the shape of the motor 30.

In addition, in the embodiments, the controller 50 is disposed on the stand 11. However, the present invention is not limited to this, and the controller 50 may be installed below the stand. In this case, the motor cover 80 may not be attached, or the stand 11 and the motor cover 80 may cover the motor 30.

### REFERENCE SIGNS LIST

- 1: Hydraulic unit
- 10: Hydraulic oil tank
- 11: Stand
- 20: Hydraulic pump
- 21: Suction pipe
- 22: Drain pipe
- 30: Motor
- 31: Fin
- 40: Oil cooler
- 41A, 41B: Header
- 42: Heat exchange unit
- 42a: Tube
- 43: Return pipe
- 50: Controller
- 51: Drive circuit
- 52: Heat sink
- 60: Cooling fan
- 70: Shroud
- 71: Body section
- 71a: Opening
- 72: Wall section
- 72a: Bent section
- 80: Motor cover
- 81: First vertical section
- 82: Inclined section
- 83: First horizontal section
- 84: Second vertical section
- 85: Second horizontal section
- 86: Flange section
- 90: Louver
- 90a: First portion
- 90b: Second portion
- 170: Shroud
- 171: Body section
- 171a: Opening
- 172: Vertical wall
- 173: Horizontal wall
- 174: Guide section

## Claims

1. A hydraulic unit (1) comprising:
a hydraulic pump (20);
a motor (30) that is configured to drive the hydraulic pump (20);
an oil cooler (40) that is configured to cool hydraulic oil discharged from the hydraulic pump (20);
a cooling fan (60) that supplies cooling air to the motor (30) and the oil cooler (40); and
a shroud (170) that is provided between the cooling fan (60) and the oil cooler (40),
wherein the oil cooler (40) includes
a pair of headers (41A, 41B), and
a heat exchange unit (42) that is provided between the pair of headers (41A, 41B); and
a controller (50) that controls the motor (30),
wherein the controller (50) includes
a drive circuit (51) that is configured to drive the motor (30), and
heat sink (52) that cools the drive circuit (51);
**characterized in that**
the controller (50) is disposed adjacent to the motor (30);
the shroud (170) includes a wall section that covers at least one of the pair of headers (41A, 41B): and
the shroud (170) includes a guide section (174) that is configured to guide part of the cooling air blown out from the cooling fan (60) toward the heat sink (52).

2. A hydraulic unit (1) comprising:
a hydraulic pump (20);
a motor (30) that is configured to drive the hydraulic pump (20);
an oil cooler (40) that is configured to cool hydraulic oil discharged from the hydraulic pump (20);
a cooling fan (60) that supplies cooling air to the motor (30) and the oil cooler (40); and
a shroud (170) that is provided between the cooling fan (60) and the oil cooler (40),
wherein the oil cooler (40) includes
a pair of headers (41A, 41B), and
a heat exchange unit (42) that is provided between the pair of headers (41A, 41B), and
the shroud (170) includes a wall section that covers at least one of the pair of headers (41A, 41B); and
a controller (50) that controls the motor (30),
wherein the controller (50) includes
a drive circuit (51) that is configured to drive the motor (30), and
a heat sink (52) that is configured to cool the drive circuit (51);
**characterized in that**
the controller (50) is disposed adjacent to the motor (30);
the shroud (170) includes a wall section that covers at least one of the pair of headers (41A, 41B): and
the hydraulic unit (1) further comprises a louver (90) that is provided between the oil cooler (40) and the motor (30) and that is configured to guide part of the cooling air blown out from the cooling fan (60) toward the heat sink (52).

3. The hydraulic unit (1) according to claim 1 or 2 further comprising:
a motor cover (80) that is provided such that the cooling air supplied by the cooling fan (60) flows around the motor (30) and that the motor cover (80) covers the motor (30),
wherein the motor cover (80) has a shape that is adapted to a shape of the motor (30).

4. The hydraulic unit (1) according to claim 3,
wherein the motor cover (80) covers almost entire space between the oil cooler (40) and the motor (30).

5. The hydraulic unit (1) according to claim 1 or 2 further comprising:
a motor cover (80) that is provided such that the cooling air supplied by the cooling fan (60) flows around the motor (30) and that the motor cover (80) covers the motor (30),
wherein the motor cover (80) covers the heat sink (52).

## Patentansprüche

1. Hydraulikaggregat (1), umfassend:
eine Hydraulikpumpe (20);
einen Motor (30), der konfiguriert ist, um die
Hydraulikpumpe (20) anzutreiben;
einen Ölkühler (40), der konfiguriert ist, um von
der Hydraulikpumpe (20) abgegebenes Hydrauliköl zu kühlen;
ein Kühlgebläse (60), das Kühlluft zu dem
Motor (30) und dem Ölkühler (40) liefert; und
eine Abtrennung (170), die zwischen dem Kühlgebläse (60) und dem Ölkühler (40) vorgesehen ist,
wobei der Ölkühler (40)
ein Paar von Sammlern bzw. Verteilern (41A, 41B), und
eine Wärmetauschereinheit (42) enthält, die zwischen dem Paar von Sammlern (41A, 41B) vorgesehen ist, und
eine Steuerung (50), die den Motor (30) steuert,
wobei die Steuerung (50) eine Ansteuerschaltung (51), die konfiguriert ist, um den Motor (30) anzusteuern, und
einen Kühlkörper (52) enthält, der die Ansteuerschaltung (51) kühlt (51),
**dadurch gekennzeichnet, dass** die Steuerung (50) benachbart zu dem Motor (30) angeordnet ist;
die Abtrennung einen Wandabschnitt enthält, der mindestens einen des Paares von Sammlern (41A; 41B) abdeckt; und
die Abtrennung (170) einen Führungsabschnitt (174) enthält, der konfiguriert ist, um einen Teil der vom Kühlgebläse (60) ausgeblasenen Kühlluft vom Kühlgebläse (60) in Richtung des Kühlkörpers (52) zu führen.

2. Hydraulikeinheit (1), umfassend:
eine Hydraulikpumpe (20);
einen Motor (30), der konfiguriert ist, um die
Hydraulikpumpe (20) anzusteuern;
einen Ölkühler (40), der konfiguriert ist, um von der Hydraulikpumpe (20) abgegebenes Hydrauliköl zu kühlen;
ein Kühlgebläse (60), das Kühlluft zu dem
Motor (30) und dem Ölkühler (40) liefert; und
eine Abtrennung (170), die zwischen dem Kühlgebläse (60) und dem Ölkühler (40) vorgesehen ist,
wobei der Ölkühler (40)
ein Paar von Sammlern bzw. Verteilern (41A, 41B), und
eine Wärmetauschereinheit (42) enthält, die
zwischen dem Paar von Sammlern (41A, 41B) vorgesehen ist, und
die Abtrennung (170) einen Wandabschnitt aufweist, der mindestens einen des Paares von Sammlern (41A, 41B) abdeckt, und
eine Steuerung (50), die den Motor (30) steuert,
wobei die Steuerung (50)
eine Ansteuersschaltung (51), die konfiguriert ist, um den Motor (30) anzusteuern, und
einen Kühlkörper (52) enthält, der konfiguriert ist, um die Ansteuerschaltung (51) zu kühlen,
**dadurch gekennzeichnet, dass**
die Steuerung (50) benachbart zu dem
Motor (30) angeordnet ist;
die Abtrennung einen Wandabschnitt enthält, der mindestens einen des Paares von Sammlern (41A; 41B) abdeckt; und
die Hydraulikeinheit (1) ferner ein Luftleitblech (90), das zwischen dem Ölkühler (40) und dem Motor (30) vorgesehen ist und konfiguriert ist, um einen Teil der vom Kühlgebläse (60) ausgeblasenen Kühlluft zu dem Kühlkörper (52) zu führen.

3. Hydraulikaggregat (1) nach Anspruch 1 oder 2, umfassend:
eine Motorabdeckung (80), die so vorgesehen ist, dass die Kühlluft, die von dem Kühlgebläse (60) zugeführt wird, den Motor (30) umströmt und dass die Motorabdeckung (80) den Motor (30) abdeckt,
wobei die Motorabdeckung (80) eine Form aufweist, die an eine Form des Motors (30) angepasst ist.

4. Hydraulikaggregat (1) nach Anspruch 3,
wobei die Motorabdeckung (80) nahezu den gesamten
Raum zwischen dem Ölkühler (40) und dem Motor (30) abdeckt.

5. Hydraulikaggregat (1) nach Anspruch 1 oder 2,
ferner umfassend:
eine Motorabdeckung (80), die so vorgesehen ist, dass die Kühlluft, die von dem Kühlgebläse (60) zugeführt wird, den Motor (30) umströmt und dass die Motorabdeckung (80) den Motor (30) abdeckt,
wobei die Motorabdeckung (80) den Kühlkörper (52) abdeckt.

## Revendications

1. Bloc hydraulique (1) comprenant :
une pompe hydraulique (20) ;
un moteur (30) configuré pour entraîner la pompe hydraulique (20) ;
un refroidisseur d'huile (40) configuré pour refroidir l'huile hydraulique refoulée hors de la pompe hydraulique (20) ;
un) fournissant de l'air de refroidissement (60) au moteur (30) et au refroidisseur d'huile (40) ; et
une flasque (170) agencée entre le ventilateur de refroidissement (60) et le refroidisseur d'huile (40),
le refroidisseur d'huile (40) comprenant :
une paire de collecteurs (41A, 41B), et
un échangeur de chaleur (42) agencé entre la paire de collecteurs (41A, 41B) et une commande (50) commandant le moteur (30),
la commande (50) comprenant :
un circuit d'entraînement (51) configuré pour entraîner le moteur (30), et
un dissipateur thermique (52) assurant le refroidissement du circuit d'entraînement (51) ;
**caractérisé en ce que**
la commande (50) est disposée dans une position adjacente au moteur (30) ;
la flasque (170) comprend une section de paroi couvrant au moins un de la paire de collecteurs (41A, 41B), et
la flasque (170) comprend une section de guidage (174) configurée pour guider une partie de l'air de refroidissement refoulée par le ventilateur de refroidissement (60) vers le dissipateur thermique (52).

2. Bloc hydraulique (1) comprenant :
une pompe hydraulique (20) ;
un moteur (30) configuré pour entraîner la pompe hydraulique (20) ;
un refroidisseur d'huile (40) configuré pour refroidir l'huile hydraulique refoulée hors de la pompe hydraulique (20) ;
un ventilateur de refroidissement (60) apportant de l'air de refroidissement au moteur (30) et au refroidisseur d'huile (40) ; et
une flasque (170) agencée entre le ventilateur de refroidissement (60) et le refroidisseur d'huile (40),
le refroidisseur d'huile (40) comprenant :
une paire de collecteurs (41A, 41B), et
un échangeur de chaleur (42) agencé entre la paire de collecteurs (41A, 41B), et
la flasque (170) comprenant une section de paroi couvrant au moins un de la paire de collecteurs (41A, 41B) ; et
une commande (50) commandant le moteur (30),
la commande (50) comprenant :
un circuit d'entraînement (51) configuré pour entraîner le moteur (30), et
un dissipateur thermique (52) configuré pour refroidir le circuit d'entraînement (51) ;
**caractérisé en ce que**
la commande (50) est disposée dans une position adjacente au moteur (30) ;
la flasque (170) comprend une section de paroi couvrant au moins un de la paire de collecteurs (41A, 41B), et
le bloc hydraulique (1) comprend en outre un volet (90) agencé entre le refroidisseur d'huile (40) et le moteur (30), et configuré pour guider une partie de l'air de refroidissement refoulé hors du ventilateur de refroidissement (60) vers le dissipateur thermique (52).

3. Bloc hydraulique (1) selon la revendication 1 ou 2, comprenant en outre :
un carter de moteur (80) agencé de sorte que l'air de refroidissement fourni par le ventilateur de refroidissement (60) s'écoule autour du moteur (30) et que le carter de moteur (80) couvre le moteur (30),
la forme du carter de moteur (80) étant adaptée à une forme du moteur (30).

4. Bloc hydraulique (1) selon la revendication 3,
le carter de moteur (80) couvrant la quasi-totalité de l'espace entre le refroidisseur d'huile (40) et le moteur (30).

5. Bloc hydraulique (1) selon la revendication 1 ou 2, comprenant en outre :
un carter de moteur (80) agencé de sorte que l'air de refroidissement fourni par le ventilateur de refroidissement (60) s'écoule autour du moteur (30) et que le carter de moteur (80) couvre le moteur (30),
le carter de moteur (80) couvrant le dissipateur thermique (52).
